# EUROPÄISCHE PATENTANMELDUNG

(11) **EP 2 131 254 A2**
(43) Veröffentlichungstag der Anmeldung: **09.12.2009**
(21) Anmeldenummer: 09154861.0
(22) Anmeldetag: 11.03.2009
(51) Int. Cl.: G05B 19/042

(54) **Kommunikationssystem zum Austausch von Daten**

(30) Priorität: 03.06.2008 DE 102008026452
(71) Anmelder: CLAAS Selbstfahrende Erntemaschinen GmbH, 33428 Harsewinkel (DE)
(72) Erfinder: Laing, Reinhard, 33428 Harsewinkel (DE); Schlingmann, Norbert, 48361 Beelen (DE)

(57) **Zusammenfassung**

Die Erfindung betrifft ein Kommunikationssystem (42) zum Austausch von Daten zwischen Datenempfängern (53, 58) und Datengeneratoren (50, 57), wobei der Datenaustausch zwischen stationären und/oder mobilen Einheiten und/oder innerhalb stationärer oder mobiler Einheit stattfindet und das den Datenaustausch ermöglichende Kommunikationsnetzwerk (49) Datenübertragungsstrecken verschiedener Kommunikationsmedien (32, 44, 45) miteinander verbindet, und dem Kommunikationsnetzwerk (49) zumindest ein Kommunikationsmanager (38) zugeordnet ist, der den Kommunikationsweg eines Datensatzes (51, 56) zwischen dem jeweiligen Datengenerator (50, 57) und dem zugehörigen Datenempfänger (53, 58) unabhängig vom Kommunikationsmedium (32, 44, 45) identifiziert.

## Beschreibung

Die Erfindung betrifft ein Kommunikationssystem zum Austausch von Daten zwischen Datenempfängern und Datengeneratoren nach dem Oberbegriff des Anspruchs 1.

Fahrzeuge wie etwa landwirtschaftliche Arbeitsmaschinen verfügen heute über eine Vielzahl elektronischer Überwachungseinrichtungen, die entweder über ein maschineninternes, sogenanntes Bussystem oder über dieses Bussystem mit externen Kommunikationseinrichtungen Daten austauschen. Neben verschiedenen anderen Inhalten ist ein wesentlicher Bestandteil dieses Datenaustausches, die Arbeitsweise des jeweiligen Fahrzeugs und seiner Arbeitsorgane zu Überwachen und zu riegeln, sowie verschiedenste Überwachungsfunktionen sicherzustellen. Im landtechnischen Anwendungsfall kommt hier neben der optimalen Einstellung der Betriebsparameter der Arbeitsorgane einer landwirtschaftlichen Arbeitsmaschine insbesondere der Lebensdauerüberwachung von Bauteilen des Fahrzeugs eine besondere Bedeutung zu. Je nach Konfiguration der Datengenerierungs- und - übertragungssysteme detektieren maschineninterne Sensorsysteme Betriebszustände des Fahrzeugs und seiner Arbeitsorgane. Diese Betriebszustände werden in maschineninternen oder externen Datenverarbeitungseinrichtungen mit dort hinterlegten Kennlinien und/oder definierten Betriebszuständen verglichen, wobei Ergebnisdaten generiert werden, die dann zur Optimierung verschiedenster Parameter des Fahrzeugs und seiner Arbeitsorgane herangezogen werden. In diesem Zusammenhang ist es auch bekannt, mittels sogenannter interner oder externer Diagnosesysteme die Lebensdauer bestimmter Arbeitsorgane und deren Bauteile zu überwachen und je nach Struktur des Diagnosesystems aufgetreten Störungen und deren Ursachen zu identifizieren oder Informationen über noch zu erwartende Lebensdauern von Bauteilen zu diagnostizieren.

Die Vielzahl der beschriebenen Überwachungs- und Steuerfunktionen werden in der Regel von Steuergeräten vorgenommen, die je nach Ausbaustufe und Entwicklungsstand Softwaremodule umfassen, welche regelmäßig aktualisiert werden müssen. In Bezug auf die kennliniengesteuerte Betriebsparameteranpassung ist diese regelmäßig Aktualisierung darauf gerichtet, dass in Abhängigkeit von Erntegutparametern und Effizienzkennwerten der landwirtschaftlichen Arbeitsmaschine die jeweiligen Steuergeräte umprogrammiert werden müssen, wobei Umprogrammierung im einfachsten Fall die Auswahl einer in einer Datenverarbeitungseinrichtung hinterlegten Kennlinie beinhaltet, die dann die Funktion des jeweiligen Steuergerätes an die neuen Randbedingungen anpasst, In allen Fällen ist es erforderlich, dass der Datenaustausch jeweils zwischen den richtigen Steuergeräten und Datenverarbeitungseinrichtungen und in der richtigen Richtung erfolgt.

Aus dem Stand der Technik ist es gemäß der DE 198 49 810 unter anderem bekannt, dass zur Programmierung von Steuergeräten Flashspeicher so strukturiert sind, dass in ihnen Nutzerzugnffsrechte und Seriennummern der Steuergeräte hinterlegt sind. Will ein Nutzer bestimmte Steuergeräte neu programmieren, muss er sich durch Eingabe und Verifizierung des Zugriffsrechts und der Seriennummer des jeweiligen Steuergerätes identifizieren. Aufgrund dessen, dass bei derartigen Kommunikationen der Sicherheitsgedanke im Vordergrund steht, wird hier zunächst durch explizite Eingabe von ldentifizierungsdaten und deren Abgleich mit in dem Flashspeicher hinterlegten Identifizierungsdaten ein konkreter Kommunikationsweg ermittelt, über den dann in einem weiteren Schritt eine Kommunikation zwischen einem Steuergerät und einer Datenverarbeitungseinrichtung, etwa in Gestalt einer Diagnoseeinrichtung, stattfindet. Derartig strukturiert Kommunikationssystem haben insbesondere den Nachteil, dass stets zunächst eine Person, etwa der Betreiber der Diagnoseeinrichtung, in einem fixen Kommunikationsmedium Daten eingeben muss, auf deren Basis dann erst eine Kommunikation stattfinden kann. Dies verlangsamt den Kommunikationsprozess, bindet ihn an ein bestimmtes Kommunikationsmedium und macht ihn wegen der Mitwirkung eines Betreibers aufwendig und teuer.

Aus der DE 195 41 816 ist ein weiteres Kommunikationssystem bekannt geworden, bei dem eine Diagnoseeinrichtung mit dem Steuergerät eines Fahrzeugs kommunizieren kann. Damit das Steuergerät mit den Steuergeräten verschiedener Fahrzeugtypen oder Modellreihen eines Fahrzeugtyps kommunizieren kann, ist das Diagnosegerät so beschaffen, dass es über eine auf einer Speicherkassette hinterlegte Software seine Identität derart ändern kann, dass es mit unterschiedlichsten Steuergeräten kommunizieren kann. Derartige System haben aber den Nachteil, dass die jeweilige Anwendung, hier das mittels Software spezifisch an den jeweiligen Fahrzeugtyp und seine Steuergeräte angepasste Diagnosegerät, ganz spezifische Informationen über das zu diagnostizierende Steuergerät, den Datenkommunikationsweg und die Art des Kommunikationsmediums umfassen muss. Dies führt einerseits dazu, dass der Einsatz des Diagnosesystems um so unflexibler ist, je weniger fahrzeugspezifische Softwarepakete auf der Speicherkassette hinterlegt sind. Andererseits erhöht die Anzahl der auf der Speicherkassette hinterlegten fahrzeugspezifischer Datenpakete die Kosten der Speicherkassette erheblich,

Es ist deshalb Aufgabe der Erfindung die beschriebenen Nachteile des Standes der Technik zu vermeiden und insbesondere ein Kommunikationssystem zu schaffen, bei dem die Kommunikationswege und die Größe der zu übertragenden Datensätze optimiert ist, sodass ein universell anwendbares, kostengünstiges und effiziente arbeitendes Kommunikationssystem geschaffen wird.

Diese Aufgabe wird erfindungsgemäß durch die kennzeichnenden Merkmale des Anspruchs 1 gelöst.

Indem bei dem Kommunikationssystem zum Austausch von Daten zwischen Datenempfängern und Datengeneratoren das den Datenaustausch ermöglichende Kommunikationsnetzwerk Datenübertragungsstrecken verschiedener Kommunikationsmedien miteinander verbindet, wobei dem Kommunikationsnetzwerk zumindest ein Kommunikationsmanager zugeordnet ist und der wenigstens eine Kommunikationsmanager den Kommunikationsweg eines Datensatzes zwischen dem jeweiligen Datengenerator und dem zugehörigen Datenempfänger unabhängig vom Kommunikationsmedium identifiziert, wird sichergestellt, dass die Kommunikationswege und die Größe der zu übertragetiden Datensätze optimiert ist, sodass ein universell anwendbares, kostengünstiges und effizient arbeitendes Kommunikationssystem geschaffen wird.

In einer vorteilhaften Ausgestaltung der Erfindung umfassen der oder die Datensätze Informationen über den Datengenerator, den Datenempfänger und das Kommunikationsmedium, die von dem Kommunikationsmanager lesbar sind und wobei der Kommunikationsmanager den Datensatz anhand der identifizierten Informationen von dem Datengenerator an den richtigen Datenempfänger und in dem zugehörigen Kommunikationsmedium übergibt. Auf diese Weise wird sichergestellt, dass der einzelne Datensatz keine Informationen über den konkreten Kommunikationsweg umfassen muss, sodass eine Reduzierung der in dem Kommunikationsnetzwerk zu übertragenden Datenmengen erreicht wird, was bei gleicher Hardwarekonfiguration des Kommunikationsnetzwerkes zu einer schnelleren Übertragung der Datensätze führt.

Indem auf dem Kommunikationsweg des jeweiligen Datensatzes unter Zwischenschaltung des Korrirnunikationsmanagers der Datengenerator zum Datenempfänger und der Datenempfänger zum Datengenerator wird, wird zudem eine übersichtliche Datenübertragungsarchitektur sichergestellt, die ebenfalls einen effizienteren Datenaustausch sicherstellt,

In einer vorteilhaften Weiterbildung der Erfindung
- definiert eine erste Datenverarbeitungseinrichtung als Datengenerator einen Datensatz "Anforderungen" und übergibt diesen mittels des Kommunikationsnetzwerks an den Kommunikationsmanager
- der Kommunikationsmanager übermittelt den Datensatz über einen Netzknoten einer als Datenempfänger fungierenden weiteren Datenverarbeitungseinrichtung, wobei in der weiteren Datenverarbeitungsemrichtung ein Antwortdatensatz generiert wird
- die weiter Datenverarbeitungseinrichtung übergibt als Datengenerator den generierten Antwortdatensatz mittels des Kommunikationsnetzwerks an den Kommunikationsmanager und
- der Kommunikationsmanager übermittelt den Antwortdatensatz an die nun als Datenempfänger fungierende erste Datenverarbeitungseinhchtung. Auf diese Weise erfolgt der Datenaustausch stets über einen Kommunikationsmanager, sodass keiner der ausgetauschten Datensätze Informationen über den jeweiligen Kommunikationsweg, das Kommunikationsmedium und die Kommunikationsplattform umfassen muss,

In einer vorteilhaften Weiterbildung der Erfindung ist der Kommunikationsmanager einer als landwirtschaftliche Arbeitsmaschine ausgeführten mobilen Einheit zugeordnet, die ein CAN-Bussystem umfasst und wobei der Kommunikationsmanager den Datenaustausch zwischen Datengeneratoren und Datenempfängern innerhalb des CAN-Bussystems und zwischen dem CAN-Bussystem und externen Datengeneratoren und Datenempfängern steuert. Auf diese Weise wird sowohl für die maschineninterne als auch maschinenexterne Kommunikation sichergestellt, dass die auszutauschenden Datensätze keine Informationen über den jeweiligen Kommunikationsweg, das Kommunikationsmedium und die jeweilige Kommunikationsplattform enthalten müssen,

In einer vorteilhaften Ausgestaltung der Erfindung werden die der landwirtschaftlichen Arbeitsmaschine zugeordneten und in deren CAN-Bussystem integrierten Datengeneratoren und Datenempfänger von Steuergeräten und/oder zumindest einer Steuer- und Eingabeeinrichtung und/oder zumindest einem Diagnosesystem gebildet und wobei in das CAN-Bussystem maschinenexterne Datengeneratoren und Datenempfänger, vorzugsweise externe Diagnosesysteme, integrierbar sind. Dies hat den Vorteil, dass das Kommunikationsnetzwerk sehr flexibel einsetztbar ist und nicht an bestimmte landwirtschaftliche Arbeitsmaschinen, deren Steuergeräte sowie bestimmte Diagnosesystem gebunden ist,

Indem in einer vorteilhaften Ausgestaltung der Erfindung, der Datensatz "Anforderungen" und der Antwortdatensatz in dem Kommunikationsnetzwerk extern Kommunikationswege und/oder interne Kommunikationswege durchlaufen kann und die internen Kommunikationswege die Kommunikationswege innerhalb eines Steuergerätes und die externen Kommunikationswege die Kommunikationswege außerhalb dieses Steuergerätes umfassen, wird sichergestellt, dass das erfindungsgemäße Kommunikationsnetzwerk sowohl maschineninterne als auch maschinenexterne Datenabfragen beantworten kann.

Je nach Komplexität der Anfrage kann das erfindungsgemäße Kommunikationssystem so strukturiert sein, dass der Datensatz "Anforderungen" mittels des Kommunikationsmanagers einem oder mehreren Datenempfängern übermittelt wird und der eine oder die mehreren Datenempfänger einen Antwortdatensatz generieren. Auf diese Weise können auch sehr komplexe Informationen in dem Kommunikationsnetzwerk beschafft und ausgetauscht werden, In diesem Zusammenhang ist es auch von Vorteil, wenn die mehreren, einen Atitwortdatensatz generierenden Datenempfänger über eine Kombination aus internen und externen Kommunikationswegen erreichbar Sind, sodass beispielsweise Informationen aus mehreren Steuergeräten nicht jeweils in separaten Antwortdatensätzen, sondern in einem einzigen Antwortdatensatz zusammenfassbar sind.

Damit neben der Bussystem-basierten Ansteuerung eines Steuergerätes zur Ausübung seiner originären Steuer- und Regelfunktion der erfindungsgemäße Datenaustausch auf einfache Weise möglich wird, ist in einer vorteilhaften Ausgestaltung der Erfindung vorgesehen, dass das zumindest eine Steuergerät einen Soft- und Hardware-Modul umfasst, der über eine erste Kommunikationsschnittstelle unmittelbar mit dem CAN-Bussystem verbunden ist und wobei das Steuergeräte zumindest eine weitere, einen Kommunikationsmanager umfassende Kommunikationsschnittstelle umfasst, die einen Datenaustausch zwischen dem CAN-Bussystem und einem Softwaremodul des Soft- und Hardwaremoduls des Steuergerätes in einem Protokollstandard, beispielsweise dem sogenannten Keyword-Protokollstandard, als Bypass zur ersten Kommunikationsschnittstelle ermöglicht.

In einer weiteren vorteilhaften Ausgestaltung der Erfindung umfasst der Soft- und Hardwaremodul des Steuergerätes eine elektronische Steuereinheit und/oder ein Onboard-Diagnose- und Kalibriermodul und/oder ein Teleservicemodul und wobei der Kommunikationsmanager den Datenaustausch zwischen diesen über interne Kommunikationswege und zwischen diesen und weiteren Steuergeräten und Diagnosemodulen auf externen Kommunikationswegen ermöglicht. Auch diese Kommunikationsarchitektur dient einem effizienten Austausch der Datensätze in dem Kommunikationssystem,

Indem ferner in der elektronischen Steuereinheit Steuer- und Regelkennlinien des jeweiligen Steuergerätes editierbar hinterlegt sind und aus der elektronischen Steuereinheit das Steuergerät betreffende Fehlfunktionsinformationen abrufbar sind; mittels des Onboard - Diagnose- und Kalibriermoduls die Abfrage der Fehlfunktionsinformationen, die Kalibrierung der Steuergeräte und die Änderung der in der elektronische Steuereinheit hinterlegten Steuer- und Regelkennlinien vorgenommen werden kann und mittels des Teleservicemoduls Daten eines oder mehrerer Steuergeräte periodisch abfragbar sind und die Abfrage selbsttätig durch das Teleservicemodul vorgenommen wird, ist das erfindungsgemäße Kommunikationssystem so beschaffen, dass es nahezu alle wesentlichen Anwendungsfälle des Datenaustauschs zwischen verschiedenen in ein Bussystem integrierten Aggregaten realisieren kann.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine als Mähdrescher ausgeführte landwirtschaftliche Arbeitsmaschine mit dem erfindungsgemäßen Kommunikationssystem
- Figur 2: eine schematische Detailansicht des Kommunikationssystems nach Figur 1
- Figur 3: eine schematische Ansicht des Datenaustausch in dem Kommunikationssystem nach Figur 2
- Figur 4: eine schematische Darstellung von Anwendungsbeispielen des erfindungsgemäßen Kommunikationssystems
- Figur 5: eine schematische Darstellung weiterer Anwendungsbeispiele des erfindungsgemäßen Kommunikationssystems

Die in Fig, 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Hordenschüttler 9 ausgeführte Trenneinrichtung 10 übergeben wird. Auf dem rotierenden Hordenschüttler 9 wird der Gutstrom 5 so gefördert, dass in dem Gutstrom enthaltene freibewegliche Körner 11 im untenseitigen Bereich des Hordenschüttlers 9 abgeschieden werden. Sowohl die am Dreschkorb 6 als auch am Hordenschüttler 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet

Weiter verfügt die landwirtschaftliche Arbeitsmaschine 1, die abweichend vom hier dargestellten Mähdrescher 2, jede beliebige landwirtschaftliche Arbeitsmaschine wie etwa Feldhäcksler, Traktoren mit Anbaugeräten, Transportfahrzeuge und dergleichen umfassen kann, über eine Fahrzeugkabine 21 in der zumindest eine mit einer Anzeigeeinrichtung 22 versehene Steuer- und Regeleinrichtung 23 angeordnet ist, mittels derer automatisch oder vom Betreiber 24 der landwirtschaftlichen Arbeitsmaschine 1 initiiert, eine Vielzahl von, noch näher zu beschreibenden Prozessen gesteuert werden können. Die Steuer- und Regeleinrichtung 23 kommuniziert über ein sogenanntes Bussystem 25 mit noch näher zu beschreibenden Sensorsystemen 26.

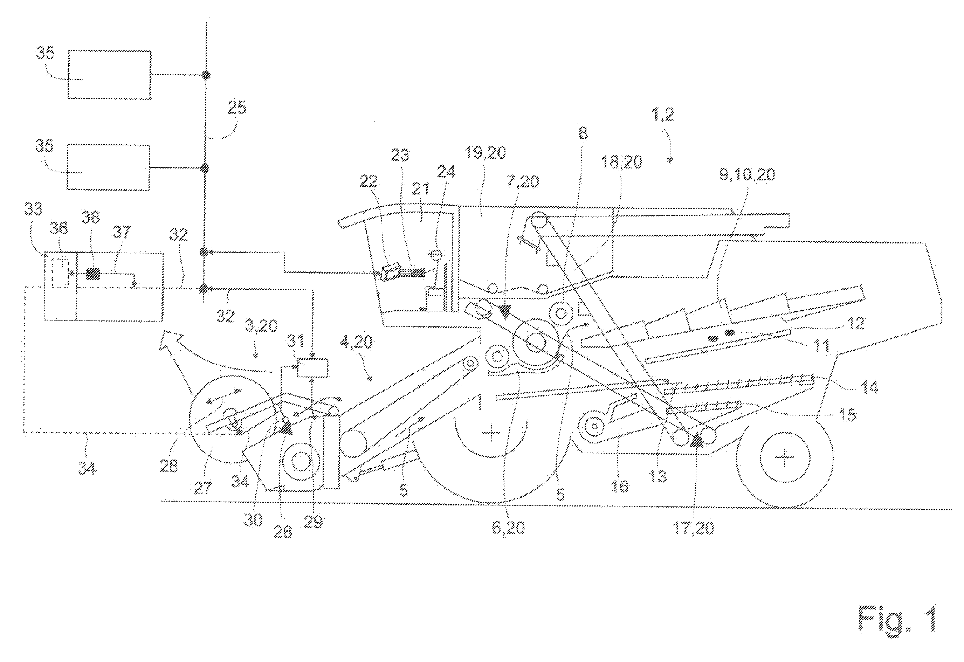

Aus Übersichtlichkeitsgründen zeigt Fig. 1 nur beispielhaft ein dem Getreideschneidwerk 3 zugeordnetes Sensorsystem 26, weitere Sensorsysteme 26 und spezifische Ausgestaltungen der Sensorsysteme 26 werden in den folgenden Figuren, soweit erforderlich, detailliert beschrieben. In an sich bekannter Weise kann das dem Getreideschneidwerk 3 zugeordnete Sensorsystem 26 diverse Druck- und Lagesensoren umfassen, die ein Verschieben einer Haspel 27 gemäß Pfeilrichtung 28 oder ein Verschwenken der Haspel 27 gemäß Pfeilrichtung 29 durch Druckbeaufschlagung oder Druckentlastung eines oder mehrerer Hubzylinder 30 ermöglichen. Zur Steuerung dieser Funktionen ist dem Sensorsystem 26 ein Steuergerät 31 zugeordnet. Das Steuergerät 31 kommuniziert mit dem der landwirtschaftlichen Arbeitsmaschine 1 zugeordneten, vorzugsweise als sogenanntes CAN-Bussystem ausgeführten Bussystem 25 über ein Leitungssystem 32 oder drahtlos. Das Steuergerät 31 (in Fig. 1 linksseitig vergrößert dargestellt) ist so konfiguriert, dass es einen ersten Soft- und Hardware-Modul 33 umfasst, in dem die Steuer- und Regelungsprozesse einer konkreten Anwendung, hier die Steuerung der Position der Haspel 27, hinterlegt sind. Der Soft- und Hardware-Modul 33 ist via Leitungssystemen 34 unmittelbar mit den Aktoren der Arbeitsorgane 20, hier den Hubzylindern 30 des Getreideschneidwerks 3, verbunden, sodass mittels des Soft-und Hardeware-Moduls 33 unmittelbar Steuerbefehle an die Aktoren 30 der Arbeitsorgane 20 Übermittel und umgekehrt von dem jeweiligen Sensorsystem 26 Signale empfangen werden können. Der Soft- und Hardware-Modul 33 ist über das Leitungssystem 32 unmittelbar mit dem CAN-Bussystem 25 der landwirtschaftlichen Arbeitsmaschine 1 verbunden, sodass der Soft- und Hardware-Modul 33 unmittelbar mit weiteren in das Bussystem 25 integrierten Datenverarbeitungseinrichtungen 35, die auch weitere Steuergeräte 31 sein können, kommunizieren kann. Es liegt im Rahmen der Erfindung, dass die Datenverarbeitungseinrichtungen 35 entweder in der landwirtschaftlichen Arbeitsmaschine 1 oder extern angeordnet sind, wobei unter externer Anordnung, die Anordnung auf weiteren mobilen oder stationären Einrichtungen verstanden werden soll, die vorzugsweise drahtlos mit dem Bussystem 25 der einen landwirtschaftlichen Arbeitsmaschine 1 kommunizieren.

In erfindungsgemäßer Weise verfügt der Softwaremodul 36 des Soft- und Hardware-Moduls 33 über eine soft- und/oder hardwarebasierte Kommunikationsschnittstelle 37, die über ein standardisiertes Protokoll, beispielsweise einen Keyword-Protokollstandard, eine Kommunikation des Soft- und Hardware-Moduls 33 mit dem CAN-Bussystem 25 der landwirtschaftlichen Arbeitsmaschine 1 nach Art eines Bypass ermöglicht In diese Kommunikationsschnittstelle 37 ist ein im Folgenden noch näher zu beschreibender Kommunikationsmanager 38 zur Optimierung des Datentransfers zwischen dem CAN-Bussystem 25 und dem Soft- und Hardwaremodul 33 des Steuergerätes 31 integriert

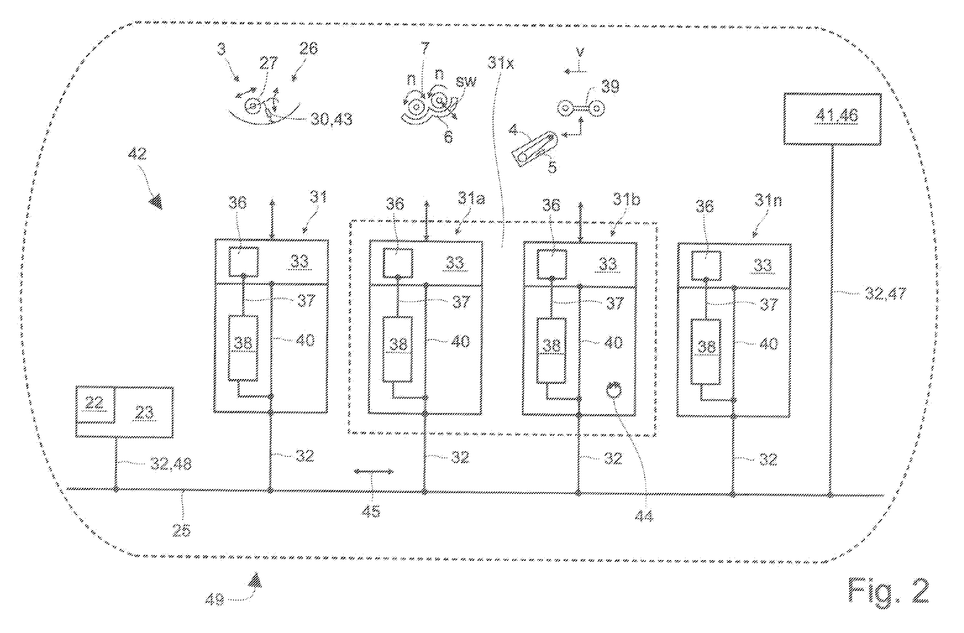

Figur 2 zeigt eine schematische Darstellung des maschinen interne n CAN-Bussystems 25 dem eine Vielzahl erfindungsgemäßer Steuergeräte 31 zugeordnet sind, wobei nur eine Auswahl an Steuergeräten 31 zur detaillierteren Erläuterung der Erfindung näher beschrieben sind. Das linksseitig dargestellte Steuergerät 31 entspricht dem in Figur 1 beschriebenen Steuergerät 31 zur Positionssteuerung der Haspel 27 des Getreideschneidwerks 3. Das Steuergerät 31a dient zur Drehzahlsteuerung n der Dreschorgane 7 und zur Einstellung der Spaltweite sw des Dreschkorbs 6. Das Steuergerät 31b steht beispielhaft für die durchsatzabhafigige Fahrgeschwindigkeitsregelung am Mähdrescher 2, bei der zunächst im Schrägförderer 4 mittels an sich bekannter Sensoren der Erntegutdurchsatz 5 ermittelt und in Abhängigkeit vom ermittelten Erntegutdurchsatz 5 und der verfügbaren Motorleistung eine optimale Fahrgeschwindigkeit v am hydraulischen Fahrantrieb 39 angesteuert wird, Es liegt im Rahmen der Erfindung, dass die Funktionen mehrerer der Steuergeräte 31 a-n in einem einzigen Steuergerät 31x zusammengefasst sind. Jedes der Steuergeräte 31 verfügt über das bereits beschriebene Soft- und Hardwaremodul 33, dessen Softwaremodul 36 über eine, den erfindungsgemäßen Kommunikationsmanager 38 umfassende Kommunikationsschnittstelle 37 und ein entsprechendes Leitungssystem 32 mit dem CAN-Bussystem 25 gekoppelt ist. Zudem umfasst jedes Steuergeräte 31 eine weitere hard- und/oder softwarebasierte Kommunikationsschnittstelle 40 über die das jeweilige Soft- und Hardware-Modul 33 direkt über das jeweilige Leitungssystem 32 oder drahtlos mit dem CAN-Bussystem 25 unter Umgehung der den Kommunikationsmanager 38 umfassenden Kommunikationsschnittstelle 37 kommunizieren, das heißt, Daten austauschen kann. Zudem ist die der landwirtschaftlichen Arbeitsmaschine 1 zugeordnete, eine Anzeigeeinrichtung 22 umfassende Steuer- und Regeleinrichtung 23 über ein Leitungssystem 32 oder drahtlos in das CAN-Bussystem 25 der landwirtschaftlichen Arbeitsmaschine 1 integriert Während die Steuer- und Regeleinrichtung 23 und die verschiedenen Steuergeräte 31 maschinenintern angeordnet sind, können zudem maschinenexterne Datenverarbeitungseinrichtungen 41, vorzugsweise an sich bekannte Diagnosesystem 46, in der Regel mittels drahtlose Datenübertragungsstrecken 32 in das CAN-Bussystem 25 der landwirtschaftlichen Arbeitsmaschine 1 eingebunden sein.

Auf diese Weise ergibt sich ein Kommunikationssystem 42 in welchem ein Datenaustausch zwischen den maschinenintern angeordneten Steuergeräten 31 und der Steuer- und Regeleinrichtung 23 und/oder zwischen diesen und der einen oder mehreren maschinenexternen Datenverarbeitungseinrichtungen 41 stattfinden kann. Bezüglich der Steuergeräte 31 kann die Kommunikation und der damit verbundene Datenaustausch entweder unmittelbar zwischen dem CAN-Bussystem 25 und dem jeweiligen Soft- und Hardware-Modul 33 über eine entsprechende Kommunikationsschnittstelle 40 erfolgen. Dieser Kommunikationsweg wird regelmäßig dann genutzt, wenn von den maschineninternen Sensoren generierte Daten an externe Systeme übergeben oder die verschiedenen Arbeitsorgane 20 der landwirtschaftlichen Arbeitsmaschine 1 nach in den Steuergeräten 31 und/oder der Steuer- und Regeleinrichtung 23 hinterlegten Steuerkennlinien betrieben werden sollen, In erfindungsgemäßer Weise kann der Datenaustausch zwischen den Soft-und Hardware-Modulen 33 der Steuergeräte 31, der Steuer- und Regeleinrichtung 23 sowie einer oder mehrerer externer Datenverarbeitungseinrichtungen 41 auch über das CAN-Bussystem 25 und die jeweilige, einen Kommunikationsmanager 38 umfassende Kommunikationsschnittstelle 37 der Steuergeräte 31 ermöglicht werden.

Der erfindungsgemäße Kommunikationsweg über den Kommunikationsmsnager 38 wird in der Regel dann genutzt, wenn dem einen oder den mehreren Steuergeräten 31 eine neue Version einer Steuerungssoftware, ein sogenanntes Update, für das jeweilige Steuergerät 31 übergeben werden soll. In diesen Fällen findet die Kommunikation in der Regel zwischen externen Datenverarbeitungseinrichtungen 41 und den in das CAN-Bussystem 25 integrierten Steuergeräten 31 und/oder der Steuer- und Regeleinrichtung 23 statt. Ein wesentliches weiteres Anwendungsgebiet bildet das Kalibrieren bestimmter Sensorsysteme 26 der landwirtschaftlichen Arbeitsmaschine 1. In diesen Fällen werden in Abhängigkeit von detektierten Parametern Kennlinien definiert, die dann die Steuerfunktion eines bestimmten oder mehrerer Steuergeräte 31 beschreiben, wobei die Kennlinien in einer bevorzugten Ausgestaltung unmittelbar in den Soft- und Hardware-Modulen 33 der Steuergeräte 31 hinterlegt werden. Einen weiteren Anwendungsfall bildet die Diagnose des jeweiligen Steuergerätes 31 selbst oder die Diagnose der von dem jeweiligen Steuergerät 31 angesteuerten Aktoren 43 der Arbeitsorgane 20 sowie der jeweils zugeordneten Sensorsysteme 26, wobei hier interne und/oder externe Diagnosesysteme 46 eingesetzt werden können. Auf diese Weise wird eine Diagnosefunktion bereitgestellt, die Störungen, Fehlfunktionen und Ausfälle von Arbeitsorganen 20 oder wahrscheinliche Ausfallzeithorizonte der Arbeitsorgane 20 detektiert.

In Figur 2 sind zugleich schematisch die möglichen internen und externen Komniunikationswege 44, 45 des erfindungsgemäßen Kommunikationssystems 42 beschrieben. Pfeil 44 repräsentiert symbolisch einen internen Kommunikationsweg innerhalb eines Steuergerätes 31. Pfeil 45 beschreibt symbolisch einen externen Kommunikationsweg zwischen den Steuergeräten 31, der Steuer- und Regeleinrichtung 23 und externen Datenverarbeitungseinrichtungen 41. Es liegt im Rahmen der Erfindung, dass die erfindungsgemäße Kommunikation ausschließlich interne oder externe Kommunikationswege 44, 45 oder eine Kombination aus beiden Kommunikationswegen 44, 45 umfassen kann. Indem die Datenübertragung zwischen den Steuergeräten 31, der Steuer- und Regeleinrichtung 23 und den externen Datenverarbeitungseinrichtungen 41 entweder über drahtlose Datenübertragungsstrecken 47 oder leitungsbasierte Datenübertragungsstrecken 48 wie etwa die Leitungssysteme 32, das maschineninterne Bussystem 25 und die verschiedenen Kommunikationsschnittstellen 37, 40 der Steuergeräte 31 erfolgt, wird ein Kommunikationsnetzwerk 49 verschiedener Kommunikationsmedien, nämlich leitungsbasierter und drahtloser Kommunikationsmedien, geschaffen.

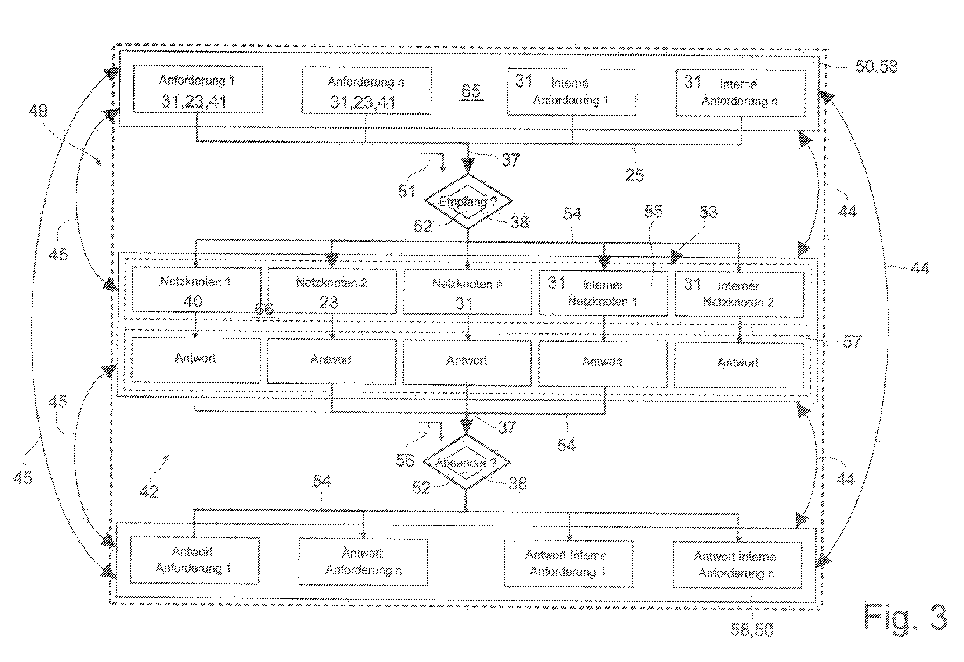

Figur 3 zeigt nun zunächst schematisch den Kommunikationsprozess in dem erfindungsgemäßen Kommunikationsnetzwerk 49 eines Kommunikationssystems 42, Die bereits beschriebenen Steuergeräte 31, die Steuer- und Regeleinrichtung 23 sowie eine oder mehrerer externe Datenverarbeitungseinrichtungen 41 bilden in einem ersten Kommunikationsschritt sogenannte Datengeneratoren 50. In Abhängigkeit davon, ob der jeweilige Datengenerator 50 ausschließlich interne oder externe Kommunikationswege 44, 45 oder eine Kombination aus beiden Kommunikationswegen 44, 45 nutzt, werden interne und/oder externe Anforderungen generiert, Diese internen und/oder externen Anforderungen werden in einem Datensatz "Anforderungen" 51 codiert und in der bereits beschriebenen Weise über ein Leitungssystem 32 oder drahtlos an das maschineninterne CAN-Bussystem 25 und von dort über die Protokoll-basierte Kommunikationsschnittstelle 37 an den erfindungsgemäßen Kommunikationsmanager 38 übergeben, Der Kommunikationsmanager 38 umfasst einen Softwaremodul 52 der so strukturiert ist, dass der Kommunikationsmanager 38 aus dem empfangenen Datensatz "Anforderungen" 51 den Datengenerator 50 des Datensatzes "Anforderungen" 51 und zugleich den zugehörigen Datenempfänger 53 sowie das jeweilige Kommunikationsmedium ableiten kann. Aus diesen Informationen definiert der Kommunikationsmanager 38 selbstständig den weiteren Kommunikationsweg 54 zu einem oder mehreren, noch näher zu beschreibenden, sogenannten internen und/oder externen Netzknoten 55, die zugleich den Zugang zu dem einen oder den mehreren erfindungsgemäßen Datenempfängern 53 bilden. Auf diese Weise wird es möglich, dass der Datensatz "Anforderungen" 51 keine Informationen über den Kommunikationsweg 54 im Bussystem 25 umfassen muss, sodass der jeweilige Datengenerator 50 keine speziellen Kenntnisse von der jeweiligen landwirtschaftlichen Arbeitsmaschine 1 und dem ihr zugeordneten Bussystem 25 haben muss, was neben kleineren zu Übertragenden Datenmengen zu einem universelleren Einsatz der Datengeneratoren 50 führt.

Der jeweilige Datenempfänger 53 des Datensatzes "Anforderung" 51 generiert in einem nächsten Kommunikationsschritt den Antwortdatensatz 56, wobei je nach Art des Kommunikationsweges 44, 45 des Datengenerators 50 und des Inhaltes des Datensatzes "Anforderungen" 51 der Datenempfänger 53 auf einem internen oder externen Kommunikationsweg 44, 45 angesteuert wird und von den Steuergeräten 31, der Steuer- und Regeleinrichtung 23 und/oder einer oder mehrerer externer Datenverarbeitungseinrichtungen 41 gebildet werden kann. Nachdem der Antwortdatensatz 56 von dem Datenempfänger 53 generiert wurde, übergibt dieser nunmehr als Datengenerator 57 den Antwortdatensatz 56 über das CAN-Bussystem 25 und die jeweilige Kommunikationsschnittstelle 37 wiederum an den erfindungsgemäßen Kommunikationsmanager 38. Dessen Softwaremodul 52 identifiziert nunmehr aus dem Antwortdatensatz 56 den Datenempfänger 58, der nunmehr von dem ursprünglichen Datengenerator 50 des Datensatzes "Anforderungen" 51 gebildet wird, wobei genau der Datengenerator 50, etwa die externe Datenverarbeitungseinrichtung 41, ein Steuergerät 31 oder die Steuer- und Regeleinrichtung 23, den Antwortdatensatz 56 übermittelt bekommt, der zuvor den Datensatz "Anforderungen" 51 generiert hat. In Analogie zur Übertragung des Datensatzes "Anforderungen" 51 definiert der Kommunikationsmanager 38 auch für den Antwortdatensatz 56 aus den ihm entnommenen Informationen selbstständig das Kommunikationsmedium und den Kommunikationsweg 54 vom neuen Datengenerator 57 zum entsprechenden Datenempfänger 58, ohne dass der jeweilige Antwortdatensatz 56 spezielle Informationen über das Kommunikationsmedium und den Kommunikationsweg zu dem jeweiligen Datenempfänger 58, dem ursprünglichen Datengenerator 50, umfasst. Auf diese Weise wird auch die Größe des Antwortdatensatzes 56 klein gehalten und damit eine schnelle Datenübertragung sichergestellt.

Die den Datensatz "Anforderung" 51 definierenden Datengeneratoren 50, die zugleich als Datenempfänger 58 den Antwortdatensatz 56 empfangen sowie die den Datensatz "Anforderungen" 51 empfangenden Datenempfänger 53, die zugleich als Datengeneratoren 57 den Antwortdatensatz 56 generieren, können als Datenverarbeitungseinrichtungen 65, 66 einer mobilen oder stationären Einheit intern und/oder extern zugeordnet sein. Als mobile Einheit fungiert hier beispielsweise die als Mähdrescher 2 ausgeführte landwirtschaftliche Arbeitsmaschine 1 oder ein mobiles Diagnosesystem 46, während die stationäre Einheit beispielsweise als ein zentral agierendes Ferndiagnosesystem 46 ausgeführt sein kann. Die Datenverarbeitungseinrichtungen 65, 66 werden in dem beschriebenen Ausführungsbeispiel von den Steuergeräten 31 und/oder der Steuer- und Regeleinrichtung 23 und/oder den externen Datenverarbeitungseinrichtungen 41 gebildet. Je nachdem wer als Datengenerator 50, 57 und wer als Datenempfänger 53, 58 fungiert, sind die verschiedenen Datenverarbeitungseinrichtungen 65, 66 der mobilen oder stationären Einrichtung dann intern oder extern zugeordnet.

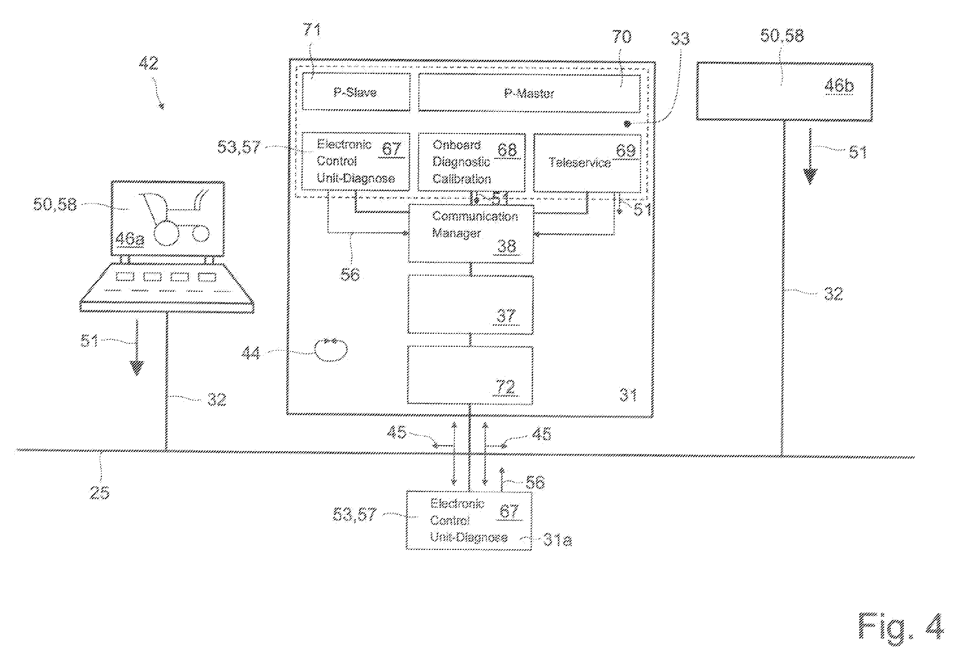

Figur 4 zeigt schematisch, den Betrieb des erfindungsgemäßen Kommunikationssystems 42 an konkreten Kommunikationsbeispielen. In Analogie zu Figur 2 kommunizieren mit dem maschineninternen Bussystem 25 Steuergeräte 31, 31a, ein Diagnosesystem 46a, welches über ein Leitungssystem 32 in das Bussystem 25 integriert ist und ein weiteres Diagnosesystem 46b, welches vorzugsweise für eine sogenannte Ferndiagnose vorgesehen ist, und wobei die Verbindung 32 zum maschineninternen Bussystem 25 dann drahtlos erfolgt. Die schematische Darstellung des Steuergerätes 31 wurde in Figur 4 gewählt, um die Kommunikationsstruktur zu visualisieren. Der Soft- und Hardwaremodul 33 umfasst eine elektronische Steuereinheit 67, ein sogenanntes Onboard - Diagnose- und Kalibriermodul 68 sowie ein sogenanntes Teleservicemodul 69. In der elektronischen Steuereinheit 67 können Steuer- und Regelkennlinien des jeweiligen Steuergeräts 31 abgelegt und editiert sowie Fehlfunktionsinformationen des jeweiligen Steuergerätes 31 abgerufen werden, Mittels des Onboard - Diagnose- und Kalibriermoduls 68 kann der Betreiber 24 der landwirtschaftlichen Arbeitsmaschine 1 beispielsweise über die in Figur 2 dargestellte Steuer- und Regeleinheit 23 den Datensatz "Anforderungen" 51 generieren, der in diesem Fall entweder die Abfrage der Fehlfunktionsinformationen, die Kalibrierung der Steuergeräte und damit verbunden, die Änderung der in der elektronische Steuereinheit 67 hinterlegten Steuer- und Regelkennlinien umfasst. Der Teleservicemoduls 69 generiert ebenfalls einen Datensatz "Anforderungen" 51, wobei dieser Datensatz "Anforderungen" 51 periodisch abzufragende Daten, wie etwa Kraftstoffverbrauch, Motorauslastung etc., umfasst, wobei die Generierung dieses Datensatzes "Anforderungen" 51 selbsttätig, ohne unmittelbare Einbeziehung des Betreibers 24 der landwirtschaftlichen Arbeitsmaschine 1 von dem Teleservicemodul 69 vorgenommen wird, Aufgrund dessen, dass nur über das Onboard - Diagnose- und Kalibiermodul 68 sowie den Teleservicemodul 69 eines Steuergerätes 31 die Datensätze "Anforderungen" 51 generierbar sind, bilden diese beiden Module 68, 69 den sogenannten Protokoll-Master, den P-Master 70. Die den erfindungsgemäßen Antwortdatensatz 56 generierende elektronische Steuereinheit 67 eines Steuergerätes bildet schließlich den sogenannten Protokoll-Slave, den P-Stave 71. Aus Vereinfachungsgründen sind die weiteren Steuergeräte 31 in Figur 4 symbolisch durch die elektronische Steuereinheit 67 eins weiteren Steuergerätes 31 a dargestellt.

In erfindungsgemäßer Weise verfügt jedes Steuergerät 31 über einen Kommunikationsmanager 38, der den Datenaustausch innerhalb eines Steuergerätes 31 auf den sogenannten internen Kommunikationswegen 44 und/oder außerhalb eines Steuergerätes 31 auf externen Kommunikationswegen 45 zwischen Steuergeräten 31, 31a sowie diversen Diagnosesystemen 46a, 46b steuert. Wie bereits beschrieben, kommuniziert die den Kommunikationsmanager 38 umfassende Kommunikationsschnittstelle 37 nach einem definierten Protokoll, beispielsweise dem sogenannten Key-Word-Protokll. Jedes Steuergerät verfügt zudem in an sich bekannter Weise über einen CAN-Bus-Treiber 72, der die Kommunikation des jeweiligen Steuergerätes 31 mit dem maschineninternen CAN-Bussystem 25 ermöglicht. Aus der Vielzahl möglicher Kommunikationsbeispiele werden nachfolgend die wesentlichen beispielhaft beschrieben.

Findet die Kommunikation zwischen Steuergeräten 31, 31a und externen Diagnosesysteme 46a, b statt, dann generieren die externen Diagnosesysteme 46a. b die Datensätze "Anforderungen" 51, die entweder neu zu installierende Softwarepakte zur Anpassung der Steuerkennlinien für einzelne Steuergeräte 31 und die Fehlerinformationsabfrage umfassen können. Die Datensätze "Anforderungen" 51 werden über das maschineninterne Bussystem 25 an das oder die Steuergeräte 31, 31 a übermittelt. In dem jeweiligen Steuergerät 31 übernimmt der Kommunikationsmanager 38 den Datensatz "Anforderungen" 51, identifiziert unabhängig vom jeweiligen Kommunikationsmedium, etwa Datenleitungen, Telefonverbindung, Funk, den Datengenerator 50, hier das jeweilige Diagnosesystem 46a, b, und den Datenempfänger 53, hier die elektronische Steuereinheit 67 des jeweiligen Steuergerätes 31, In dem jeweiligen Steuergerät 31, 31 a wird dann der Antwortdatensatz 56 generiert, der entweder die abgefragte Fehlerinformation oder die Bestätigung einer erfolgreichen Softwareinstallation umfasst. Der Antwortdatensatz 56 wird dann wiederum mittels des jeweiligen Kommunikationsmanagers 38 an das entsprechende Diagnosesystem 46a, b übermittelt. Bei der übermittlung des Antwortdatensatzes 56 wird dann der vorherige Datengenerator 50 zum Datenempfänger 58 und der vorherige Datenempfänger 53 zum Datengenerator 57.

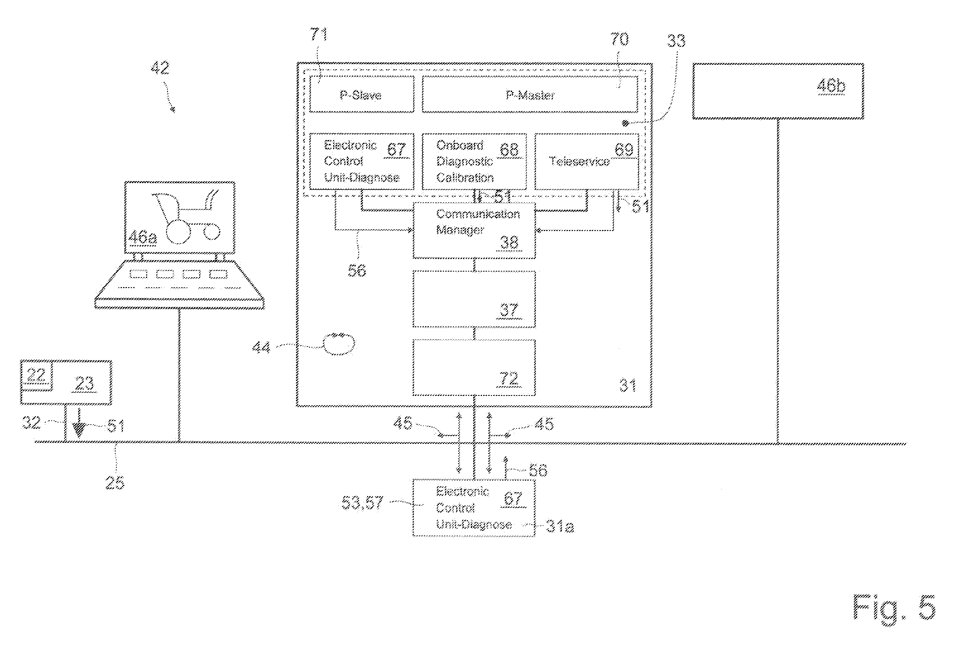

Ein weiterer Anwendungsfall ergibt sich gemäß Figur 5, wenn der Betreiber 24 der landwirtschaftlichen Arbeitsmaschine 1 Fehlfunktionsinformationen abrufen oder die Kalibrierung der Steuergeräte 31 und damit verbunden, die Änderung der in der elektronische Steuereinheit 67 hinterlegten Steuer und Regelkennlinien vornehmen will. Dann generiert der Betreiber 24 der landwirtschaftlichen Arbeitsmaschine 1 den Datensatz "Anforderungen" 51, im einfachsten Fall über die in Figur 2 dargestellte Steuer- und Regeleinrichtung 23, der in analoger Weise zu dem zuvor beschriebenen Anwendungsfall über den jeweiligen Kommunikationsmanager 38 von dem Onboard - Diagnose- und Kalibriermodul 68 an die elektronische Steuereinheit 67 des jeweiligen Steuergerätes 31 übermittel wird. Je nachdem, ob Steuer- und Regelkennlinien editiert oder Fehlerinformationen abgefragt werden sollen, generiert die elektronische Steuereinheit 67 den Antwortdatensatz 56, der mittels des Kommunikationsmanagers 38 schließlich wieder an das Onboard - Diagnose- und Kalibriermodul 68 übergeben und beispielsweise über eine der Steuer- und Regeleinrichtung 23 zugeordnete Anzeigeinrichtung 22 für den Betreiber 24 der landwirtschaftlichen Arbeitsmaschine 1 visualisiert wird. Es liegt im Rahmen der Erfindung, dass einem Steuergerät 31 auch unmittelbar eine nicht dargestellte Anzeigeeinrichtung zugeordnet sein kann, sodass der Antwortdatensatz 56 auch unmittelbar an einem Steuergerät 31 visualisiert werden kann. Sofern über das Onboard - Diagnose- und Kalibriermodul 68 ausschließlich eine Kalibrierung von Steuergeräten 31 vorgenommen werden soll, kann die Kommunikation auch so strukturiert sein, dass der Datensatz "Anforderungen" 51 von dem Onboard - Diagnose- und Kalibriermodul 68 eines Steuergerätes 31 an dessen Kommunikationsmanager 38 übergeben wird und die weitere Kommunikation ausschließlich über externe Kommunikationswege 45 mit Onboard - Diagnose- und Kalibriermodulen 68 weiterer Steuergeräte 31a erfolgt. Ein derartiger Anwendungsfall ergibt sich immer dann, wenn die Änderung oder Anpassung der Steuerkennlinie eines Steuergerätes 31 Einfluss auf die Steuerkennlinien weiterer Steuergeräte 31 a hat.

Einen weiteren Anwendungsfall repräsentiert die Kommunikation zwischen dem Teleservicemodul 69 und dem Onboard - Diagnose- und Kalibriermodul 68 desselben Steuergerätes 31 oder den Onboard - Diagnose- und Kalibriermodulen 68 weiterer Steuergeräte 31a. Diese Kommunikation findet, wie bereits beschrieben, dann statt, wenn periodisch oder sporadisch abzufragende Daten, wie etwa der Kraftstoffverbrauch oder die Motorauslastung zu ermitteln sind.

### Bezugszeichenliste:

- 1: landwirtschaftliche Arbeitsmaschine
- 2: Mähdrescher
- 3: Getreideschneidwerk
- 4: Schrägförderer
- 5: Erntegutstrom
- 6: Dreschkorb
- 7: Dreschorgan
- 8: Umlenktrommel
- 9: Hordenschüttler
- 10: Trenneinrichtung
- 11: Körner
- 12: Rücklaufboden
- 13: Zuführboden
- 14: Siebebene
- 15: Siebebene
- 16: Gebläse
- 17: Reinigungseinrichtung
- 18: Elevator
- 19: Korntank
- 20: Arbeitsorgan
- 21: Fahrzeugkabine
- 22: Anzeigeeinrichtung
- 23: Steuer- und Regeleinrichtung
- 24: Betreiber
- 25: Bussystem
- 26: Sensorsystem
- 27: Haspel
- 28: Pfeilrichtung
- 29: Pfeilrichtung
- 30: Hubzylinder

- 31: Steuergerät
- 32: Leitungssystem
- 33: Soft- und Hardware-Modul
- 34: Leitungssystem
- 35: Datenverarbeitungseinrichtung
- 36: Softwaremodul
- 37: Kommunikationsschnittstelle
- 38: Kommunikationsmanager
- 39: hydraulischer Fahrantrieb
- 40: Kommunikationsschnittstelle
- 41: Datenverarbeitungseinrichtung
- 42: Kommunikationssystem
- 43: Aktor
- 44: interner Kommunikationsweg
- 45: externer Kommunikationsweg
- 46: Diagnosesystem
- 47: Datenübertragungsstrecke
- 48: Datenübertragungsstrecke
- 49: Kommunikationsnetzwerk
- 50: Datengenerator
- 51: Datensatz "Anforderungen"
- 52: Softwaremodul
- 53: Datenempfänger
- 54: Kommunikationsweg
- 55: Netzknoten
- 56: Antwortdatensatz
- 57: Datengenerator
- 58: Datenempfänger
- 65: Datenverarbeitungseinrichtung
- 66: Datenverarbeitungseinrichtung
- 67: Elektronische Steuereinheit
- 68: Onboard - Diagnose- und Kalibriermodul
- 69: Teleservicemodul
- 70: P-Master
- 71: P-Slave
- 72: CAN-Bus-Treiber

## Patentansprüche

1. Kommunikationssystem zum Austausch von Daten zwischen Datenempfängern und Datengeneratoren, wobei der Datenaustausch zwischen stationären und/oder mobilen Einheiten und/oder innerhalb stationärer oder mobiler Einheit stattfindet und das den Datenaustausch ermöglichende
Kommunikationsnetzwerk Datenübertragungsstrecken verschiedener Kommunikationsmedien miteinander verbindet,
**dadurch gekennzeichnet,**
**dass** dem Kommunikationsnetzwerk (49) zumindest ein Kommunikationsmanager (38) zugeordnet ist und der wenigstens eine
Kommunikationsmanager (38) den Kommunikationsweg eines Datensatzes (51, 56) zwischen dem jeweiligen Datengenerator (50, 57) und dem zugehörigen Datenempfänger (53, 58) unabhängig vom Kommunikationsmedium (32, 44, 45) identifiziert.

2. Kommunikationssystem zum Austausch von Daten zwischen Datenempfängern und Datengeneratoren nach Anspruch 1,
**dadurch gekennzeichnet,**
**dass** der Datensatz (51, 56) Informationen über den Datengenerator (50, 57), den Datenempfänger (53, 58) und das Kommunikationsmedium (32, 44, 45) umfasst, die von dem Kommunikationsmanager (38) lesbar sind und wobei der Kommunikationsmanager (38) den Datensatz (51, 56) anhand der identifizierten\ Informationen von dem Datengenerator (50, 57) an den richtigen Datenempfänger (53, 58) und in dem zugehörigen Kommunikationsmedium (32, 44, 45) übergibt.

3. Kommunikationssystem zum Austausch von Daten zwischen Datenempfängern und Datengeneratoren nach einem der vorhergehenden Ansprüche,
**dadurch gekennzeichnet,**
**dass** auf dem Kommunikationsweg (32, 44, 45) des jeweiligen Datensatzes (51, 56) unter Zwischenschaltung des Kommunikationsmanagers (38) der Datengenerator (50) zum Datenempfänger (58) und der Datenempfänger (53) zum Datengenerator (57) wird.

4. Kommunikationssystem zum Austausch von Daten zwischen Datenempfängern und Datengeneratoren nach Anspruch 3,
**dadurch gekennzeichnet,**
**dass**
- eine erste Datenverarbeitungseinrichtung (65) als Datengenerator (50) einen Datensatz "Anforderungen" (51) definiert und mittels des Kommunikationsnetzwerks (49) an den Kommunikationsmanager (38) übergibt der Kommunikationsmanager (38) den Datensatz "Anforderungen" (51) über einen Netzknoten (55) einer als Datenempfänger (53) fungierenden weiteren Datenverarbeitungseinrichtung (66) übermittelt und in der weiteren Datenverarbeitungseinrichtung (66) ein Antwortdatensatz (56) generiert wird
- die weiter Datenverarbeitungseinrichtung (66) als Datengenerator (57) den generierten Antwortdatensatz (56) mittels des Kommunikationsnetzwerks (49) an den Kommunikationsmanager (38) übergibt
- der Kommunikationsmanager (38) den Antwortdatensatz (56) an die nun als Datenempfänger (58) fungierende erste Datenverarbeitungseinrichtung (65) übermittelt.

5. Kommunikationssystem zum Austausch von Daten zwischen Datenempfängern und Datengeneratoren nach einem der vorhergehenden Ansprüche,
**dadurch gekennzeichnet,**
**dass** der Kommunikationsmanager (38) einer als landwirtschaftliche Arbeitsmaschine (1) ausgeführten mobilen Einheit zugeordnet ist und die landwirtschaftliche Arbeitsmaschine (1) ein CAN-Bussystem (25) umfasst und der Kommunikationsmanager (38) den Datenaustausch zwischen Datengeneratoren (50, 57) und Datenempfängern (53, 58) innerhalb des CAN-Bussystems (25) und zwischen dem CAN-Bussystem (25) und externen Datengeneratoren (46a, b) und Datenempfängern (46a, b) steuert.

6. Kommunikationssystem zum Austausch von Daten zwischen Datenempfängern und Datengeneratoren nach Anspruch 5,
**dadurch gekennzeichnet,**
**dass** die der landwirtschaftlichen Arbeitsmaschine (1) zugeordneten und in deren CAN-Bussystem (25) integrierten Datengeneratoren (50, 57) und Datenempfänger (53, 58) von Steuergeräten (31, 31a-x) und/oder zumindest einer Steuer- und Eingabeeinrichtung (23) und/oder zumindest einem Diagnosesystem (46a, b) gebildet werden und wobei in das CAN-Bussystem (25) maschinenexterne Datengeneratoren (50) und Datenempfänger (58), vorzugsweise externe Diagnosesysteme (46a, b), integrierbar sind.

7. Kommunikationssystem zum Austausch von Daten zwischen Datenempfängern und Datengeneratoren nach den Ansprüchen 4 bis 6,
**dadurch gekennzeichnet,**
**dass** der Datensatz "Anforderungen" (51) und der Antwortdatensatz (56) in dem Kommunikationsnetzwerk (49) externe Kommunikationswege (45) und/oder
interne Kommunikationswege (44) durchlaufen und wobei die internen Kommunikationswege (44) die Kommunikationswege innerhalb eines Steuergerätes (31) und die externen Kommunikationswege (45) die Kommunikationswege außerhalb dieses Steuergerätes (31) bilden.

8. Kommunikationssystem zum Austausch von Daten zwischen Datenempfängern und Datengeneratoren nach einem der Ansprüche 4-7,
**dadurch gekennzeichnet,**
**dass** der Datensatz "Anforderungen" (51) mittels des Kommunikationsmanagers (38) einem oder mehreren Datenempfängern (53) übermittelt wird und der eine oder die mehreren Datenempfänger (53) einen Antwortdatensatz (56) generieren.

9. Kommunikationssystem zum Austausch von Daten zwischen Datenempfängern und Datengeneratoren nach Anspruch 8,
**dadurch gekennzeichnet,**
**dass** die mehreren, einen Antwortdatensatz (56) generierenden Datenempfänger (53) über eine Kombination aus internen und externen Kommunikationswegen (44, 45) erreichbar sind.

10. Kommunikationssystem zum Austausch von Daten zwischen Datenempfängern und Datengeneratoren nach einem der vorhergehenden Ansprüche,
**dadurch gekennzeichnet,**
**dass** das zumindest eine Steuergerät (31) einen Soft- und Hardware-Modul (33) umfasst, der über eine erste Kommunikationsschnittstelle (40) unmittelbar mit dem CAN-Bussystem (25) verbunden ist und wobei das Steuergerät (31) zumindest eine weitere, einen Kommunikationsmanager (38) umfassende Kommunikationsschnittstelle (37) umfasst, die einen Datenaustausch zwischen dem CAN-Bussystem (25) und einem Softwaremodul (36) des Soft- und Hardwaremoduls (33) des Steuergerätes (31) in einem Protokollstandard als Bypass zur ersten Kommunikationsschnittstelle (40) ermöglicht.

11. Kommunikationssystem zum Austausch von Daten zwischen Datenempfängern und Datengeneratoren nach Anspruch 10,
**dadurch gekennzeichnet,**
**dass** der Soft- und Hardwaremodul (33) des Steuergerätes (31) eine elektronische Steuereinheit (67) und/oder ein Onboard-Diagnose- und Kalibriermodul (68) und/oder ein Teleservicemodul (69) umfasst und wobei der Kommunikationsmanager (38) den Datenaustausch zwischen diesen über interne Kommunikationswege (44) und zwischen diesen und weiteren Steuergeräten (31a-x) und Diagnosemodulen (46a, b) auf externen Kommunikationswegen (45) ermöglicht.

12. Kommunikationssystem zum Austausch von Daten zwischen Datenempfängern und Datengeneratoren nach einem der Ansprüche 10 und 11,
**dadurch gekennzeichnet,**
**dass** in der elektronischen Steuereinheit (67) Steuer- und Regelkennlinien des jeweiligen Steuergerätes (31a-x) editierbar hinterlegt sind und aus der elektronischen Steuereinheit (67) das Steuergerät (31a-x) betreffende Fehlfunktionsinformationen abrufbar sind; mittels des Onboard - Diagnose- und Kalibriermoduls (68) kann die Abfrage der Fehlfunktionsinformationen, die Kalibrierung der Steuergeräte (31a-x) und die Änderung der in der elektronische Steuereinheit (67) hinterlegten Steuer- und Regelkennlinien vorgenommen werden und mittels des Teleservicemoduls (69) sind Daten eines oder mehrerer Steuergeräte (31a-x) abfragbar und wobei die Abfrage selbsttätig durch das Teleservicemodul (69) vorgenommen wird.
